# EUROPÄISCHE PATENTSCHRIFT

(11) **EP 1 875 724 B1**
(45) Veröffentlichungstag und Bekanntmachung des Hinweises auf die Patenterteilung: **25.07.2012**
(21) Anmeldenummer: 06724610.8
(22) Anmeldetag: 27.04.2006
(51) Int. Cl.: H04L 29/12, G05B 19/418

(54) **ADRESSVERGABE FÜR SICHERE TEILNEHMER EINES INTERBUS FELDBUSSES**
ADDRESS ASSIGNMENT FOR SAFE USERS OF AN INTERBUS FIELD BUS
AFFECTATION D'ADRESSE POUR DES NOEUDS SURS D'UN BUS DE TERRAIN INTERBUS

(30) Priorität: 27.04.2005 DE 102005019970
(43) Veröffentlichungstag der Anmeldung: 09.01.2008
(73) Patentinhaber: Phoenix Contact GmbH & Co. KG, 32823 Blomberg (DE)
(72) Erfinder: SCHMIDT, Joachim, 32805 Horn-Bad Meinberg (DE)
(74) Vertreter: Herden, Andreas F.
(86) Internationale Anmeldenummer: PCT/EP2006/003922
(87) Internationale Veröffentlichungsnummer: WO 2006/114314

(56) Entgegenhaltungen:
- US-A1- 2002 083 246
- US-A1- 2002 138 668
- POESCHMANN A ET AL: "AUTOCONFIGURATION MANAGEMENT FUER FELDBUSSE- PROFIBUS PLUG & PLAY" ELEKTROTECHNIK UND INFORMATIONSTECHNIK, SPRINGER VERLAG, WIEN, AT, Bd. 117, Nr. 5, Mai 2000 (2000-05), Seiten 335-339, XP001077985 ISSN: 0932-383X

## Beschreibung

Die Erfindung betrifft allgemein Automatisierungssysteme in der Industrie, und insbesondere Steuerungssysteme, die zumindest ein Bussystem mit daran angeschlossenen, insbesondere sicheren, Busteilnehmern und eine zentrale Steuerungseinrichtung umfassen, sowie Verfahren zu deren Betrieb.

Steuer- und Datenübertragungsanlagen nehmen heute aufgrund des damit möglichen hohen Automatisierungsgrades eine herausragende Stellung in der industriellen Fertigung und Anlagensteuerung ein. Sehr verbreitet ist die Verwendung eines Bussystems, über das eine Vielzahl dezentraler Ein- und Ausgabeeinheiten mit einer zentralen Steuerungseinrichtung verbunden werden.

Zur Einhaltung von Sicherheitsstandards werden in der Automatisierungstechnik vorwiegend Feldbussysteme, wie beispielsweise CAN-Bus, Profibus oder INTERBUS, in Verbindung mit sicherheitsgerichteten Buskomponenten eingesetzt. Die an den Feldbus angeschlossenen Buskomponenten werden im Folgenden auch als Büsteilnehmer bezeichnet.

Es ist bekannt, einem Busteilnehmer zur Erhöhung der Sicherheit eine individuelle Teilnehmeradresse zuzuordnen, welche beispielsweise direkt am Busteilnehmer eingestellt werden kann.

Aus EP 1 206 868 B1 ist ferner ein Verfahren zum Konfigurieren eines sicheren Busteilnehmers bekannt sowie ein Steuerungssystem, welches einen solchen Busteilnehmer aufweist. Bei dem in EP 1 206 868 B1 beschriebenen Verfahren ist eine Verwaltungseinheit für die Vergabe von Teilnehmeradressen vorgesehen, welche an den Bus angeschlossen ist. Für die Verwaltungseinheit ist ein spezieller Wartungsmodus vorgesehen, in welchem Wartungstelegramme über den Bus versandt werden. Bei Empfang eines solchen Wartungstelegramms wird von einem sicheren Busteilnehmer ein Anmeldetelegramm an die Verwaltungseinheit gesandt, welches eine festgelegte Universaladresse umfasst. Empfängt die Verwaltungseinheit wiederum ein solches Anmeldetelegramm mit einer enthaltenen Universaladresse, sendet sie ein Adressvergabetelegramm mit einer definierten Teilnehmeradresse an den sicheren Busteilnehmer zurück, wo diese gespeichert wird.

Nachteilig an dem in EP 1 206 868 B1 beschriebenen Verfahren ist die Notwendigkeit eines speziellen Wartungsmodus sowie die hohe Anzahl auszutauschender Telegramme, um dem sicheren Busteilnehmer eine Teilnehmeradresse zuzuordnen. Ferner ist nachteilig, dass für die Zuordnung einer Teilnehmeradresse, welche für die spätere Kommunikation verwendet wird, im Busteilnehmer bereits eine Adressierung, in EP 1 206 868 B1 als Universaladresse bezeichnet, abgelegt sein muss.

Aus DE 199 34 514 C1 ist ein Verfahren zum Konfigurieren eines an einen Feldbus angeschlossenen Busteilnehmers bekannt, welches das Übermitteln einer logischen und einer physikalischen Adresse an einen Busteilnehmer von einer Adressvergabeeinheit vorsieht. Die übermittelte physikalische Adresse wird anhand einer tatsächlichen physikalischen Position des Busteilnehmers verifiziert und die logische Adresse in Abhängigkeit von der Verifikation in einem Speicher des Busteilnehmers gespeichert.

Nachteilig an diesem Verfahren ist, dass der Busteilnehmer Informationen über seine tatsächliche physikalische Position im Bus benötigt.

Ein weiteres Verfahren ist aus US 2002/0138668 A1 bekannt.

Der Erfindung liegt daher die Aufgabe zugrunde, einen konstruktiven Lösungsansatz aufzuzeigen, wie ein an ein Bussystem angeschlossener Busteilnehmer, insbesondere ein sicherer Busteilnehmer, ohne die beschriebenen Nachteile des Standes der Technik konfiguriert und diesem insbesondere eine definierte Teilnehmeradresse zugeordnet werden kann.

Die Aufgabe wird in überraschend einfacher Weise durch einen Gegenstand gemäß einem der anhängenden unabhängigen Ansprüche gelöst. Vorteilhafte Ausführungsformen und Weiterbildungen sind in den Unteransprüchen umschrieben.

Dementsprechend umfasst das erfindungsgemäße Verfahren zum Konfigurieren eines an einen Feldbus in einem sicheren Steuerungssystem angeschlossenen sicheren Busteilnehmers, um dem sicheren Busteilnehmer eine definierte Teilnehmeradresse zuzuordnen, die folgenden Schritte:
- Versenden einer Adressvergabenachricht von einer an den Feldbus angeschlossenen Steuerungseinheit an den sicheren Busteilnehmer, wobei die Adressvergabenachricht die definierte Teilnehmeradresse umfasst,
- Abspeichern der definierten Teilnehmeradresse in einem Speicher des sicheren Busteilnehmers, und
- Versenden einer Bestätigungsnachricht von dem sicheren Busteilnehmer zu der Steuerungseinheit, wobei die Bestätigungsnachricht die definierte Teilnehmeradresse umfasst, wobei
das Versenden der Adressvergabenachricht in Abhängigkeit von in der Steuerungseinheit hinterlegten Projektierungsdaten des an den Feldbus angeschlossenen sicheren Busteilnehmers erfolgt.

Im Rahmen der Erfindung liegt auch ein Verfahren mit den Schritten:
- Definieren der Teilnehmeradresse innerhalb einer an den Feldbus angeschlossenen Steuerungseinheit in Abhängigkeit der physikalischen Position des sicheren Busteilnehmers innerhalb des Feldbusses,
- Versenden einer Adressvergabenachricht von der Steuerungseinheit an den sicheren Busteilnehmer, wobei die Adressvergabenachricht die definierte Teilnehmeradresse umfasst,
- Abspeichern der definierten Teilnehmeradresse in einem Speicher des sicheren Busteilnehmers, und
- Versenden einer Bestätigungsnachricht von dem sicheren Busteilnehmer zu der Steuerungseinheit, wobei die Bestätigungsnachricht die definierte Teilnehmeradresse umfasst.

Vorzugsweise umfasst dabei der Schritt des Definierens der Teilnehmeradresse den Schritt des Hinterlegens von Projektierungsdaten des an den Feldbus angeschlossenen sicheren Busteilnehmers in der Steuerungseinheit, wobei die hinterlegten Projektierungsdaten eine Verknüpfung der physikalischen Position des sicheren Busteilnehmers innerhalb des Feldbusses und der definierten Teilnehmeradresse umfassen.

Besonders vorteilhaft ist das erfindungsgemäße Verfahren in einem Ringbussystem ausführbar, wobei die physikalische Position des sicheren Busteilnehmers durch dessen Position innerhalb der Reihenfolge der an den Ringbus angeschlossenen Busteilnehmer definiert ist.

Bei dem erfindungsgemäßen Verfahren wird vorteilhaft keine Verwaltungseinheit und keine spezieller Wartungsmodus und dementsprechend auch keine speziellen Wartungstelegramme benötigt. Die dadurch entstehende zusätzliche Busbelastung tritt bei dem erfindungsgemäßen Verfahren daher nicht auf.

Ferner benötigt das erfindungsgemäße Verfahren keine Einstellung der physikalischen Position auf dem sicheren Busteilnehmer und dementsprechend auch keine Positionsermittlungseinheit auf dem Busteilnehmer zur Ermittlung seiner physikalischen Position.

Um dem sicheren Busteilnehmer eine definierte Teilnehmeradresse zuzuordnen, bedarf es somit gemäß dem erfindungsgemäßen Verfahren keiner bereits vorhandenen Adressierungsinformation auf seiten des sicheren Busteilnehmers, wie dies beim eingangs beschriebenen Stand der Technik der Fall ist. Bei dem in EP 1 206 868 B1 beschriebenen Verfahren muss der Busteilnehmer über eine festgelegte Universaladresse verfügen, die er mittels eines Anmeldetelegramms an eine Verwaltungseinheit überträgt. Durch diese Universaladresse wird die Kommunikation ermöglicht, mittels derer die Teilnehmeradresse zum Busteilnehmer übertragen wird, welche dann für die weitere Kommunikation verwendet wird. Hierauf verzichtet das erfindungsgemäße Verfahren und ermöglicht statt dessen die Kommunikation zur Übertragung der Teilnehmeradresse dadurch, dass innerhalb der Steuerungseinheit die physikalische Position des sicheren Busteilnehmers innerhalb des Feldbusses, an welchen die Teilnehmeradresse übertragen werden soll, bekannt ist. Zu diesem Zweck sind vorzugsweise Projektierungsdaten des an den Feldbus angeschlossenen sicheren Busteilnehmers in der Steuerungseinheit hinterlegt, die eine Verknüpfung der physikalischen Position des sicheren Busteilnehmers mit der definierten Teilnehmeradresse umfassen.

Bei dem in DE 199 34 514 C1 beschriebenen Verfahren muss der Busteilnehmer die Information besitzen, an welcher physikalischen Position innerhalb des Bussystems er sich befindet, um den Empfang einer logischen Adresse durch Verifikation einer mitübertragenen physikalischen Adresse mittels der beim Busteilnehmer bekannten physikalischen Position zu ermöglichen. Eine solche Verifikation auf seiten des Busteilnehmers ist nach dem erfindungsgemäßen Verfahren nicht erforderlich. Statt dessen erfolgt erfindungsgemäß vorzugsweise eine Verifikation seitens der Steuerungseinheit durch Versenden einer Bestätigungsnachricht von dem sicheren Busteilnehmer zu der Steuerungseinheit, wobei die Bestätigungsnachricht die dem Busteilnehmer zugeordnete Teilnehmeradresse umfasst.

Wie bereits oben erwähnt, sind Automatisierungssysteme mit ringförmigen Bussystemen, insbesondere nach dem INTERBUS-Standard, besonders geeignet zum Ausführen des erfindungsgemäßen Verfahrens.

Der INTERBUS arbeitet in der Art eines Schieberegisters, bei dem die Busteilnehmer ringförmig miteinander verbunden sind und die einzelnen Speicherplätze des Schieberegisters bilden. Aufgrund dieser Schieberegister-Struktur werden beim INTERBUS keine Teilnehmeradressen im herkömmlichen Sinne benötigt.

Der INTERBUS-Master, der die Daten durch den Schieberegister-Ring taktet, ist in der Regel mit einer Steuerungseinheit verbunden. Die Steuerungseinheit kann dabei eine nicht sichere und eine sichere Steuerung enthalten.

Die Busteilnehmer sind in der Regel Ein-/Äusgabeeinheiten, die nicht sichere und / oder sichere Ein-/Ausgänge bereitstellen.

Soll die sichere Steuerung mit einem sicheren Busteilnehmer kommunizieren, so erfolgt die Adressierung der sicheren Busteilnehmer über das nicht sichere INTERBUS-Protokoll. Um für die Übertragung von sicherheitsrelevanten Daten die Sicherheitsanforderungen zu erfüllen, müssen die sicherheitsrelevanten Daten um Daten erweitert werden, die eine Erkennung aller systematischen und zufälligen Fehler bei der Übertragung über den nicht sicheren INTERBUS ermöglichen. Diese Daten,werden auf dem INTERBUS-Master durch den Master der Sicherheits-Kommunikations-Schicht (Safety-Communication-Layer-Master; SCLM) und auf den Busteilnehmern durch den Slave der Sicherheits-Kommunikations-Schicht (Safety-Communication-Layer-Slave; SCLS) berechnet,bzw. ausgewertet. Die sicherheitsrelevanten Daten und die Sicherungsdaten ergeben zusammen die sicheren Nachrichten, die vom nicht sicheren INTERBUS-Protokoll wie normale Prozessdaten übertragen werden.

Als Sicherungsdaten können beispielsweise Checksummen wie z.B. CRC, Zeitstempel oder laufende Nummern verwendet werden. Bei einer bevorzugten Ausführungsform eines sicheren INTERBUS-Protokolls kommt eine CRC24-Checksumme, eine laufende Nummer, welche 3 Bit umfasst, und eine als Connection-ID bezeichnete Teilnehmeradresse, welche vorzugsweise 7 Bit umfasst, zum Einsatz.

Die Aufgabe der Connection-ID ist es, Adressierungsfehler des nicht sicheren INTERBUS, z.B. durch Einstreuung zusätzlicher Takte in das Schieberegister, zu erkennen. Der SCLM generiert für jeden angeschlossenen sicheren Busteilnehmer in der Reihenfolge des projektierten Busaufbaus eine eigene Connection-ID.

Vorzugsweise in allen sicheren Nachrichten, die zwischen dem SCLM und den SCLS auf den Busteilnehmern ausgetauscht werden, ist die jeweilige Connection-ID enthalten. Sie wird durch den CRC24 mit abgesichert. Der SCLM und die SCLS auf den Busteilnehmern überprüfen die Connection-ID in jedem empfangenen Telegramm und sind somit in der Lage, Adressierungsfehler des nicht sicheren INTERBUS-Protokolls zu erkennen.

Der Anlauf der sicheren Kommunikationsbeziehungen läuft wie folgt ab:
Im Ausgangszustand kann der nicht sichere INTERBUS bereits hochgelaufen sein und die Übertragung nicht sicherer Daten bereits laufen.

Sobald die sichere Steuerung mit dem SCLM hochgelaufen ist, überträgt der SCLM an alle projektierten sicheren Busteilnehmer Verbindungsabbruchnachrichten (Abort_Connection-Nachrichten). Dies geschieht unabhängig davon, ob die sicheren Busteilnehmer vorhanden sind, hochgelaufen sind oder wie sie auf diese Nachricht reagieren. Die Verbindung zu einem sicheren Busteilnehmer verlässt diesen Zustand (Connection_Aborted) dadurch, dass die den SCLM steuernde Einrichtung (SRC, Safety-Related-Controller) eine Initialisierungsanfrage für diese Verbindung an den SCLM schickt. Der SCLM überträgt dann eine Adressvergabenachricht bzw. eine Parameter-Nachricht mit dem Parameter "Connection-ID" an den sicheren Busteilnehmer.

Sobald der sichere Busteilnehmer mit seinem SCLS hochgelaufen ist, überträgt der SCLS Fehlernachrichten (Safety_Slave_Error-Nachrichten) an den SCLM. Dies geschieht unabhängig davon, ob eine sichere Steuerung vorhanden ist, ob der SCLM hochgelaufen ist oder wie der SCLM auf diese Nachricht reagiert, mit der Ausnahme, der SCLS empfängt vom SCLM eine Adressvergabenachricht bzw. eine sichere Parameter-Nachricht mit dem Parameter "Connection-ID".

Sobald die sichere Steuerung und die sicheren Busteilnehmer hochgelaufen sind und der Controller des SCLM den Auftrag erteilt eine Kommunikationsbeziehung aufzubauen (Initiate_Reqest), überträgt der SCLM sichere Parameter-Nachrichten an den SCLS des Busteilnehmers.
Der SCLS sendet den empfangenen Parameter mit einer gleichartigen Nachricht an den SCLM zurück, um den Empfang zu quittieren. Besondere Wärtungstelegramme werden nicht benötigt. Der erste übertragene Parameter ist hierbei die Connection-ID. Der SCLS empfängt und quittiert sie. Die hierbei verwendeten Nachrichten enthalten die Connection-ID also als Parameter-Wert.

Weitere Parameter werden nur übertragen, wenn die Übertragung der Connection-ID erfolgreich war. Alle weiter zwischen SCLM und SCLS übertragenen sicheren Nachrichten enthalten die Connection-ID. Empfängt der SCLM oder SCLS eine sichere Nachricht, so werden die Connection-ID, die CRC-Checksumme und die laufende Nummer überprüft. Tritt eine fehlerhafte Connection-ID auf, so werden alle sicheren Verbindungen im Bussystem abgebaut.

Im weiteren Verlauf liest der SCLM Parameter aus dem SCLS aus, die beispielsweise den Geräte-Typ, den Hersteller, die Seriennummer usw. enthalten. Durch diese Daten wird verifiziert, dass der sichere Teilnehmer der projektierte Gerätetyp am projektierten Einbauort ist.

Ist dies der Fall, so gilt die sichere Kommunikationsbeziehung jetzt als aufgebaut. Die Übertragung und Überprüfung der Connection-ID garantiert jetzt, dass immer mit dem korrekten sicheren Busteilnehmer kommuniziert wird.

Im weiteren Verlauf können Geräteparameter wie beispielsweise Abschaltzeiten oder Filterzeiten übertragen werden. Die Anzahl der Geräteparameter hängt vom Gerätetyp ab. Ist die Parametrierung abgeschlossen, so erfolgt die Übertragung der sicheren Prozessdaten.

Ein erfindungsgemäßes Steuerungssystem zum sicheren Steuern von sicherheitskritischen Prozessen, welches insbesondere zum Ausführen des oben beschriebenen Verfahrens geeignet ist, umfasst ein Bussystem eine an das Bussystem angeschlossene Steuerungseinrichtung, welche Mittel zum Generieren und Versenden einer Adressvergabenachricht in Abhängigkeit hinterlegter Projektierungsdaten aufweist und zumindest einen an das Bussystem angeschlossenen sicheren Busteilnehmer, welcher Mittel zum Aufnehmen und Auswerten einer Adressvergabenachricht, einen Speicher zum Speichern einer dem Busteilnehmer zugeordneten Teilnehmeradresse und Mittel zum Generieren und Versenden einer Bestätigungsnachricht, welche die zugeordnete Teilnehmeradresse umfasst, aufweist, wobei die in der Steuerungseinheit hinterlegten Projektierungsdaten eine Verknüpfung der physikalischen Position des zumindest einen sicheren Busteilnehmers innerhalb des Bussystems und der dem Busteilnehmer zugeordneten Teilnehmeradresse umfassen.

Vorzugsweise ist das Bussystem als Ring-Bussystem, insbesondere nach dem INTERBUS-Standard, mit einer Mehrzahl daran angeschlossener Busteilnehmer ausgebildet. In einem solchen Bussystem wird die physikalische Position des sicheren Busteilnehmers vorzugsweise durch dessen Position innerhalb der Reihenfolge der an das Bussystem angeschlossenen Mehrzahl von Busteilnehmern definiert.

Der sichere Busteilnehmer weist vorteilhaft Mittel zum. Versenden einer Fehlernachricht auf, wobei die Mittel dazu ausgebildet sind, eine Fehlernachricht zu versenden, wenn in dem Speicher keine gültige Teilnehmeradresse gespeichert ist.

Die Erfindung wird nachfolgend beispielhaft anhand bevorzugter Ausführungsformen und unter Bezugnahme auf die beigefügten Zeichnungen genauer beschrieben. Dabei bezeichnen gleiche Bezugszeichen in den Zeichnungen gleiche oder ähnliche Teile.

Es zeigen:
- Fig. 1:: eine schematische Darstellung einer Prozessnachricht, welche sicherheitsrelevante Daten beinhaltet,
- Fig. 2:: schematisch den Summenrahmen eines INTERBUS-Bussystems, in welchen die Prozessnachricht aus Fig. 1 eingebettet ist,
- Fig. 3:: schematisch eine Initialisierungssequenz entsprechend einer bevorzugten Ausführungsform des erfindungsgemäßen Verfahrens.

Das erfindungsgemäße Verfahren eignet sich besonders für alle ringförmigen Bussysteme, wobei die nachfolgend beschriebenen Ausführungsbeispiele den INTERBUS-Standard verwenden.

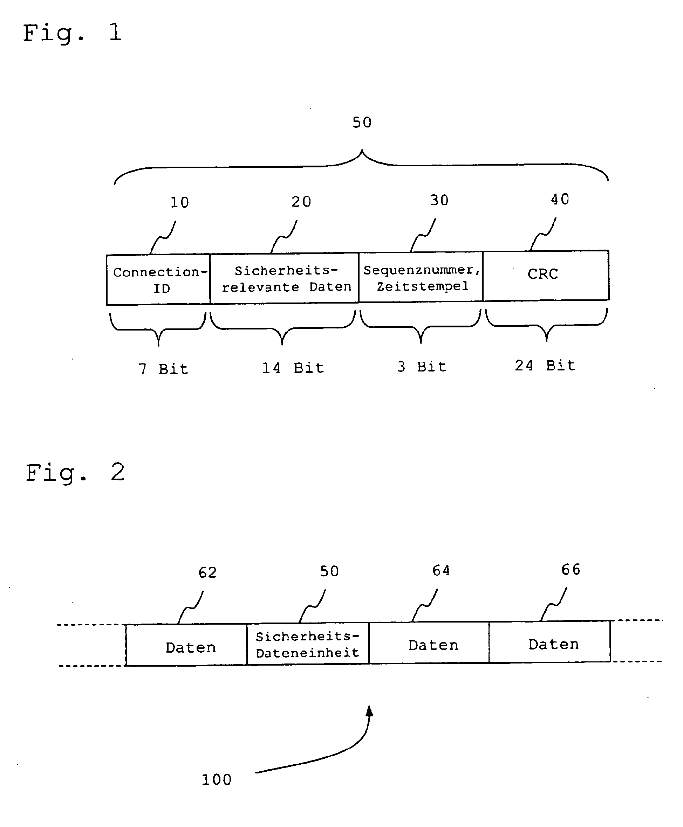

In Fig. 1 ist eine Prozessnachricht 50 dargestellt, welche sicherheitsrelevante Daten 20 beinhaltet und zusammen mit weiteren Daten eine Sicherheitsdateneinheit bildet. Die weiteren, zur Erhöhung der Sicherheit vorgesehenen Daten umfassen in diesem Ausführungsbeispiel die als Connection-ID bezeichnete Teilnehmeradresse 10, eine Dateneinheit 30, welche eine Sequenznummer und einen Zeitstempel umfasst, sowie eine 24 Bit lange CRC-Checksumme 40.

Bei Einsatz eines Bussystems gemäß INTERBUS-Standard werden die Daten innerhalb eines Summenrahmens 100 übertragen. In diesem Ausführungsbeispiel enthält der Summenrahmen 100 weitere Dateneinheiten 62, 64 und 66, welche auch nicht sichere Daten beinhalten können.

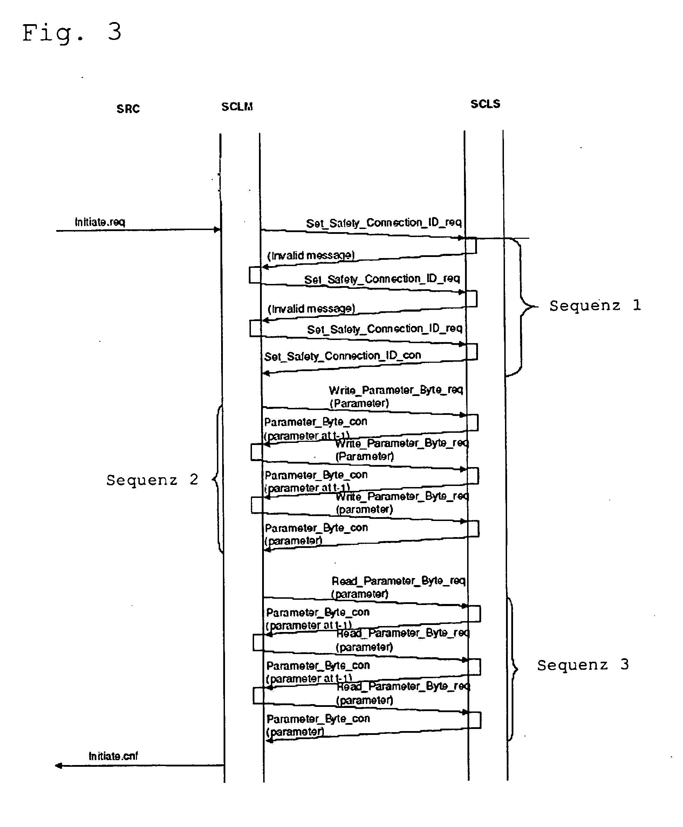

In Fig. 3 ist eine Initialisierungssequenz dargestellt, welche drei Einzelsequenzen umfasst. Die erste Sequenz dient der Übermittlung der Teilnehmeradresse oder "Connection-ID", während die zweite und dritte Sequenz in dieser Ausführungsform der Übergabe verschiedener Geräteparameter des sicheren Busteilnehmers dient.

Parameter werden vom SCLM an den SCLS mit einer als "Write_Parameter_Byte_req" bezeichneten Nachricht übertragen. Mit einer als "Read_Parameter_Byte_Req" bezeichneten Nachricht liest der SCLM einen Parameter aus dem SCLS aus. Auf beide Nachrichten antwortet der SCLS mit einer als "Parameter_Byte_con" bezeichneten Nachricht, die den geschriebenen Parameter spiegelt bzw. den angeforderten Parameter enthält. Die "Write_Parameter_Byte_req"-Nachricht mit dem Parameter "Connection-ID" hat eine spezielle Codierung des Parameters "Connection-ID" und eine eigene Nachrichtenbezeichnung "Set_Safety_Connection_ID_req". Die "Parameter_Byte_con"-Nachricht des SCLM auf diese Nachricht, mit der die "Connection-ID" zurückgeschickt wird, wird als "Set_Safety_Connection_ID_con" bezeichnet. In dem in Fig. 3 dargestellten Ausführungsbeispiel wird die "Set_Safety_Connection_ID_req"-Nachricht bis zu dreimal an den SCLS gesendet.

## Patentansprüche

1. Verfahren zum Konfigurieren eines an einen Feldbus in einem sicheren Steuerungssystem angeschlossenen sicheren Busteilnehmers, wobei dem sicheren Busteilnehmer eine definierte Teilnehmeradresse zugeordnet wird, und wobei der Feldbus dem INTERBUS-Standard entspricht, mit den Schritten:
- Versenden einer Adressvergabenachricht von einer an den Feldbus angeschlossenen Steuerungseinheit an den sicheren Busteilnehmer, wobei die Adressvergabenachricht die definierte Teilnehmeradresse umfasst,
- Abspeichern der definierten Teilnehmeradresse in einem Speicher des sicheren Busteilnehmers, **gekennzeichnet durch** den Schritt:
- Versenden einer Bestätigungsnachricht von dem sicheren Busteilnehmer zu der Steuerungseinheit, wobei die Bestätigungsnachricht die definierte Teilnehmeradresse umfasst, wobei
das Versenden der Adressvergabenachricht in Abhängigkeit von in der Steuerungseinheit hinterlegten Projektierungsdaten des an den Feldbus angeschlossenen sicheren Busteilnehmers erfolgt, wobei die hinterlegten Projektierungsdaten eine Verknüpfung der physikalischen Position des sicheren Busteilnehmers innerhalb des Feldbusses und der definierten Teilnehmeradresse umfassen.

2. Verfahren nach Anspruch 1, ferner mit dem Schritt:
- Aktivieren der Kommunikation zwischen der Steuerungseinheit und dem sicheren Busteilnehmer, wobei das Versenden der Adressvergabenachricht nach Aktivieren der Kommunikation erfolgt.

3. Verfahren nach Anspruch 2, wobei vor Aktivieren der Kommunikation eine Verbindungsabbruchnachricht von der Steuerungseinheit an den sicheren Busteilnehmer versandt wird.

4. Verfahren nach einem der vorstehenden Ansprüche, wobei von dem sicheren Busteilnehmer vor Empfang einer Adressvergabenachricht von der Steuerungseinheit eine Fehlernachricht an die Steuerungseinheit versandt wird.

5. Verfahren nach einem der vorstehenden Ansprüche, ferner mit dem Schritt;
- Versenden einer Parameterübergabenachricht von dem sicheren Busteilnehmer zu der Steuerungseinheit.

6. Verfahren nach Anspruch 5, ferner mit dem Schritt:
- Verifizieren der in der Steuerungseinheit hinterlegten Projektierungsdaten des sicheren Busteilnehmers durch Vergleichen mit von dem sicheren Busteilnehmer übertragenen Parametern.

7. Verfahren nach einem der vorstehenden Ansprüche, ferner mit dem Schritt:
- Versenden einer Prozessnachricht von der Steuerungseinheit an den sicheren Busteilnehmer und/oder
- Versenden einer Prozessnachricht von dem sicheren Busteilnehmer zu der Steuerungseinheit, wobei die Prozessnachricht zumindest Prozessdaten zur Steuerung eines Prozess und die definierte Teilnehmeradresse umfasst.

8. Verfahren nach einem der vorstehenden Ansprüche, ferner mit dem Schritt:
- Überprüfen der in einer Parameterübergabenachricht oder einer Prozessnachricht enthaltenen definierten Teilnehmeradresse durch den sicheren Busteilnehmer oder durch die Steuerungseinheit.

9. Verfahren nach Anspruch 8, wobei bei Erkennen einer fehlerhaften definierten Teilnehmerdresse ein Fehlersignal erzeugt wird.

10. Verfahren nach Anspruch 8, wobei bei Erkennen einer fehlerhaften definierten Teilnehmerdresse die Verbindungen zwischen der Steuerungseinheit und allen an den Feldbus angeschlossenen sicheren Busteilnehmern abgebaut wird.

11. Verfahren nach einem der vorstehenden Ansprüche, wobei die Steuerungseinheit als Bus-Master des Feldbusses ausgebildet und/oder mit einem Bus-Master des Feldbusses verbunden ist.

12. Verfahren nach einem der Ansprüche 1 bis 11, ferner umfassend den Schritt:
- Definieren der Teilnehmeradresse innerhalb der Steuerungseinheit in Abhängigkeit der physikalischen Position des sicheren Busteilnehmers innerhalb des Feldbusses.

13. Verfahren nach Anspruch 12, wobei der Schritt des Definierens der Teilnehmeradresse den Schritt des Hinterlegens von Projektierungsdaten des an den Feldbus angeschlossenen sicheren Busteilnehmers in der Steuerungseinheit umfasst.

14. Verfahren nach Anspruch 12 oder 13, wobei der Feldbus als Ringbus mit einer Mehrzahl daran angeschlossener Busteilnehmer ausgebildet ist und die physikalische Position des sicheren Busteilnehmers durch dessen Position innerhalb der Reihenfolge der an den Ringbus angeschlossenen Mehrzahl von Busteilnehmern definiert ist.

15. Steuerungssystem nach einem der Ansprüche 12 bis 14, wobei das Bussystem als Ring-Bussystem mit einer Mehrzahl daran angeschlossener Busteilnehmer ausgebildet ist und die physikalische Position des zumindest einen sicheren Busteilnehmers durch dessen Position innerhalb der Reihenfolge der an das Ring-Bussystem angeschlossenen Mehrzahl von Busteilnehmern definiert ist.

16. Steuerungssystem zum sicheren Steuern von sicherheitskritischen Prozessen, geeignet zur Ausführung eines Verfahrens nach einem der vorstehenden Ansprüche, zumindest umfassend
- ein Bussystem, wobei das Bussystem ein INTERBUS-Busystem ist,
- eine an das Bussystem angeschlossene Steuerungseinheit, und
- zumindest einen an das Bussystem angeschlossenen sicheren Busteilnehmer, wobei
der zumindest eine sichere Busteilnehmer Mittel zum Aufnehmen und Auswerten einer Adressvergabenachricht sowie
einen Speicher zum Speichern einer dem Busteilnehmer zugeordneten Teilnehmeradresse aufweist,
in der Steuerungseinheit Projektierungsdaten des an den Feldbus angeschlossenen sicheren Busteilnehmers hinterlegt sind, wobei die in der Steuerungseinheit hinterlegten Projektierungsdaten eine Verknüpfung der physikalischen Position des zumindest einen sicheren Busteilnehmers innerhalb des Bussystems und der dem Busteilnehmer zugeordneten Teilnehmeradresse umfassen,
die Steuerungseinheit Mittel zum Generieren und Versenden der Adressvergabenachricht in Abhängigkeit der hinterlegten Projektierungsdaten aufweist, wobei die Adressvergabenachricht eine definierte Teilnehmeradresse umfasst, und der sichere Busteilnehmer zum Versenden einer Bestätigungsnachricht zu der Steuerungseinheit ausgebildet ist, wobei die Bestätigungsnachricht die definierte Teilnehmeradresse umfasst.

17. Steuerungssystem nach Anspruch 16, wobei der zumindest eine sichere Busteilnehmer Mittel zum Versenden einer Fehlernachricht aufweist, wobei die Mittel dazu ausgebildet sind, eine Fehlernachricht zu versenden, wenn in dem Speicher keine gültige Teilnehmeradresse gespeichert ist.

18. Steuerungssystem nach einem der vorstehenden Ansprüche, wobei das Bussystem ein Ringsystem ist.

## Claims

1. Method for configuring a secure bus subscriber connected to a field bus in a secure control system, wherein the secure bus subscriber is assigned a defined subscriber address, and wherein the field bus corresponds to the INTERBUS standard, having the steps of:
- sending an address allocation message from a control unit connected to the field bus to the secure bus subscriber, wherein the address allocation message includes the defined subscriber address,
- storing the defined subscriber address in a memory in the secure bus subscriber, **characterised by** the step of
- sending an acknowledgement message from the secure bus subscriber to the control unit, wherein the acknowledgement message includes the defined subscriber address, wherein
the address allocation message is sent on the basis of planning data for the secure bus subscriber connected to the field bus which are stored in the control unit, wherein the stored planning data include a link between the physical position of the secure bus subscriber within the field bus and the defined subscriber address.

2. Method as claimed in Claim 1, further having the step of:
- activating the communication between the control unit and the secure bus subscriber, wherein the address allocation message is sent after activation of the communication.

3. Method as claimed in Claim 2, wherein prior to activation of the communication, a connection termination message is sent from the control unit to the secure bus subscriber.

4. Method as claimed in any one of the preceding claims, wherein an error message is sent from the secure bus subscriber to the control unit prior to reception of an address allocation message from the control unit.

5. Method as claimed in any one of the preceding claims, further having the step of:
- sending a parameter transfer message from the secure bus subscriber to the control unit.

6. Method as claimed in Claim 5, further having the step of:
- verifying, by means of a comparison with parameters transmitted by the secure bus subscriber, the planning data of the secure bus subscriber which are stored in the control unit.

7. Method as claimed in any one of the preceding claims, further having the step of:
- sending a process message from the control unit to the secure bus subscriber,
and/or
- sending a process message from the secure bus subscriber to the control unit,
wherein the process message includes at least process data for controlling a process and the defined subscriber address.

8. Method as claimed in any one of the preceding claims, further having the step of:
- checking, by the secure bus subscriber or by the control unit, the defined subscriber address contained in a parameter transfer message or a process message.

9. Method as claimed in Claim 8, wherein an error signal is generated upon recognition of an erroneous defined subscriber address.

10. Method as claimed in Claim 8, wherein upon recognition of an erroneous defined subscriber address, the connections between the control unit and all secure bus subscribers connected to the field bus are broken.

11. Method as claimed in any one of the preceding claims, wherein the control unit is formed as a bus master for the field bus and/or is connected to a bus master for the field bus.

12. Method as claimed in any one of Claims 1 to 11, further comprising the step of:
- defining the subscriber address within the control unit on the basis of the physical position of the secure bus subscriber within the field bus.

13. Method as claimed in Claim 12, wherein the step of defining the subscriber address comprises the step of storing, in the control unit, planning data for the secure bus subscriber connected to the field bus.

14. Method as claimed in Claim 12 or 13, wherein the field bus is formed as a ring bus having a plurality of bus subscribers connected thereto and the physical position of the secure bus subscriber is defined by the position thereof within the order of the plurality of bus subscribers connected to the ring bus.

15. Control system [*sic*] as claimed in any one of Claims 12 to 14, wherein the bus system is formed as a ring bus system having a plurality of bus subscribers connected thereto and the physical position of the at least one secure bus subscriber is defined by the position thereof within the order of the plurality of bus subscribers connected to the ring bus system.

16. Control system for the secure control of safety-critical processes, suitable for implementing a method as claimed in any one of the preceding claims, at least including:
- a bus system, wherein the bus system is an INTERBUS bus system,
- a control unit connected to the bus system, and
- at least one secure bus subscriber connected to the bus system, wherein
the at least one secure bus subscriber comprises means for picking up and evaluating an address allocation message and also a memory for storing a subscriber address assigned to the bus subscriber,
planning data for the secure bus subscriber connected to the field bus are stored in the control unit, wherein the planning data stored in the control unit include a link between the physical position of the at least one secure bus subscriber within the bus system and the subscriber address assigned to the bus subscriber,
the control unit comprises means for generating and sending the address allocation message on the basis of the stored planning data, wherein the address allocation message includes a defined subscriber address, and **characterised in that** the secure bus subscriber is formed for sending an acknowledgment message to the control unit, wherein the acknowledgement message includes the defined subscriber address.

17. Control system as claimed in Claim 16, wherein the at least one secure bus subscriber comprises means for sending an error message, wherein the means are designed to send an error message if there is no valid subscriber address stored in the memory.

18. Control system as claimed in any one of the preceding claims, wherein the bus system is a ring system.

## Revendications

1. Procédé pour configurer un abonné de bus sûr, raccordé à un bus de champ dans un système de commande sûr, une adresse d'abonné définie étant attribuée à l'abonné de bus sûr, et le bus de champ correspondant au standard INTERBUS, comprenant les étapes suivantes :
- envoi d'un message d'attribution d'adresse par une unité de commande raccordée au bus de champ à l'abonné de bus sûr, le message d'attribution d'adresse comprenant l'adresse d'abonné définie,
- enregistrement de l'adresse d'abonné définie dans une mémoire de l'abonné de bus sûr, **caractérisé par** l'étape suivante :
- envoi d'un message de confirmation par l'abonné de bus sûr à l'unité de commande, le message de confirmation comprenant l'adresse d'abonné définie,
l'envoi du message d'attribution d'adresse s'effectuant en fonction de données de projet, déposées dans l'unité de commande, de l'abonné de bus sûr raccordé au bus de champ, les données de projet déposées comprenant une association de la position physique de l'abonné de bus sûr à l'intérieur du bus de champ et de l'adresse d'abonné définie.

2. Procédé selon la revendication 1, comprenant en outre l'étape suivante :
- activation de la communication entre l'unité de commande et l'abonné de bus sûr, l'envoi du message d'attribution d'adresse s'effectuant après l'activation de la communication.

3. Procédé selon la revendication 2, un message d'interruption de liaison étant envoyé par l'unité de commande à l'abonné de bus sûr avant l'activation de la communication.

4. Procédé selon l'une des revendications précédentes, un message d'erreur étant envoyé à l'unité de commande par l'abonné de bus sûr avant la réception d'un message d'attribution d'adresse par l'unité de commande.

5. Procédé selon l'une des revendications précédentes, comprenant en outre l'étape consistant en :
- l'envoi d'un message de transmission de paramètres par l'abonné de bus sûr à l'unité de commande.

6. Procédé selon la revendication 5, comprenant en outre l'étape consistant en :
- la vérification des données de projet, déposées dans l'unité de commande, de l'abonné de bus sûr par comparaison avec des paramètres transmis par l'abonné de bus sûr.

7. Procédé selon l'une des revendications précédentes, comprenant en outre l'étape consistant en :
- l'envoi d'un message de processus par l'unité de commande à l'abonné de bus sûr et/ou
- l'envoi d'un message de processus par l'abonné de bus sûr à l'unité de commande, le message de processus comprenant au moins des données de processus pour la commande d'un processus et l'adresse d'abonné définie.

8. Procédé selon l'une des revendications précédentes, comprenant en outre l'étape consistant en :
- le contrôle de l'adresse d'abonné définie, contenue dans un message de transfert de paramètres ou d'un message de processus, par l'abonné de bus sûr ou par l'unité de commande.

9. Procédé selon la revendication 8, un signal d'erreur étant généré en cas de détection d'une adresse d'abonné définie erronée.

10. Procédé selon la revendication 8, les liaisons entre l'unité de commande et tous les abonnés de bus sûrs, raccordés au bus de champ, étant supprimées en cas de détection d'une adresse d'abonné définie erronée.

11. Procédé selon l'une des revendications précédentes, l'unité de commande étant conçue comme maître de bus (bus-master) du bus de champ et/ou étant reliée à un maître de bus (bus-master) du bus de champ.

12. Procédé selon l'une des revendications 1 à 11, comprenant en outre l'étape consistant en :
- la définition de l'adresse d'abonné à l'intérieur de l'unité de commande en fonction de la position physique de l'abonné de bus sûr à l'intérieur du bus de champ.

13. Procédé selon la revendication 12, l'étape de la définition de l'adresse d'abonné comprenant l'étape du dépôt de données de projet de l'abonné de bus sûr, raccordé au bus de champ, dans l'unité de commande.

14. Procédé selon la revendication 12 ou 13, le bus de champ étant conçu comme bus en anneau avec une pluralité d'abonnés de bus raccordés à celui-ci et la position physique de l'abonné de bus sûr étant définie par sa position à l'intérieur de l'ordre de succession de la pluralité d'abonnés de bus raccordés au bus en anneau.

15. Système de commande selon l'une des revendications 12 à 14, le système de bus étant conçu comme système de bus en anneau avec une pluralité d'abonnés de bus raccordés à celui-ci et la position physique du au moins un abonné de bus sûr étant définie par sa position à l'intérieur de l'ordre de succession de la pluralité d'abonnés de bus raccordés au système de bus en anneau.

16. Système de commande pour la commande sûre de processus critiques au niveau de la sécurité, approprié pour la mise en oeuvre d'un procédé selon l'une des revendications précédentes, comprenant au moins :
- un système de bus, le système de bus étant un système de bus INTERBUS,
- une unité de commande raccordée au système de bus, et
- au moins un abonné de bus sûr, raccordé au système de bus,
le au moins un abonné de bus sûr comprenant des moyens pour la réception et l'analyse d'un message d'attribution d'adresse ainsi qu'une mémoire pour le stockage d'une adresse d'abonné attribuée à l'abonné de bus,
des données de projet de l'abonné de bus sûr, raccordé au bus de champ, étant déposées dans l'unité de commande, les données de projet déposées dans l'unité de commande comprenant une association de la position physique du au moins un abonné de bus sûr à l'intérieur du système de bus et de l'adresse d'abonné attribuée à l'abonné de bus, l'unité de commande présentant des moyens pour générer et envoyer le message d'attribution d'adresse en fonction des données de projet déposées, le message d'attribution d'adresse comprenant une adresse d'abonné définie et **caractérisé en ce que** l'abonné de bus sûr est conçu pour l'envoi d'un message de confirmation à l'unité de commande, le message de confirmation comprenant l'adresse d'abonné définie.

17. Système de commande selon la revendication 16, le au moins un abonné de bus sûr présentant des moyens pour l'envoi d'un message erroné, les moyens étant conçus pour envoyer un message d'erreur lorsqu'aucune adresse d'abonné valable n'est stockée dans la mémoire.

18. Système de commande selon l'une des revendications précédentes, le système de bus étant un système en anneau.
